# EUROPÄISCHE PATENTANMELDUNG

(11) **EP 2 301 705 A2**
(43) Veröffentlichungstag der Anmeldung: **30.03.2011**
(21) Anmeldenummer: 10009937.3
(22) Anmeldetag: 20.09.2010
(51) Int. Cl.: B23K 15/00, B23K 15/06

(54) **Verfahren und Vorrichtung zum Elektronenstrahlschweissen**

(30) Priorität: 18.09.2009 DE 102009041826
(71) Anmelder: Kaushal, Christian, 47053 Duisburg (DE); Hagenbäumer, Dirk, 47799 Krefeld (DE)
(72) Erfinder: Kaushal, Christian, 47053 Duisburg (DE); Hagenbäumer, Dirk, 47799 Krefeld (DE)
(74) Vertreter: Ring & Weisbrodt

(57) **Zusammenfassung**

Die vorliegenden Erfindung betrifft ein Verfahren zum Schweißen eines Werkstücks (6, 12) mittels wenigstens eines Elektronenstrahls (5), welches **dadurch gekennzeichnet ist, dass** eine wenigstens eine Öffnung (18, 19) aufweisende Arbeitskammer (1, 7, 16) mit der wenigstens einen Öffnung (18, 19) um einen Teilbereich des zu schweißenden Werkstücks (6) derart angeordnet wird, dass die wenigstens eine Öffnung (18, 19) der Arbeitskammer (1, 7, 16) von dem Werkstück (6, 12) oder zumindest einem Teilbereich des Werkstücks (6, 12) verschlossen wird, in der mit dem einen Werkstück (6, 12) beziehungsweise dem Teilbereich des Werkstücks (6, 12) verschlossenen Arbeitskammer (1, 7, 16) ein gegenüber dem atmosphärischen Druck verringerter Druck (3), vorzugsweise ein Vakuum, erzeugt wird, und der wenigstens eine Elektronenstrahl (5) derart geformt und geführt wird, dass der wenigstens eine Elektronenstrahl (5) innerhalb der geschlossenen Arbeitskammer (1, 7, 16) auf das zu schweißende Werkstück (6, 12) auftrifft.

Darüber hinaus betrifft die vorliegende Erfindung eine Vorrichtung zum Elektronenstrahlschweißen (A) von Werkstücken (6, 12) mit wenigstens einer Einrichtung zur Erzeugung wenigstens eines Elektronenstrahls (5), wenigstens einer Einrichtung zur Formung und/oder Führung des wenigstens einen Elektronenstrahls (5) und einer Arbeitskammer, in welcher der Schweißvorgang erfolgt, wobei die Arbeitskammer (1, 7, 16) wenigstens eine Öffnung (18, 19) aufweist, und die Arbeitskammer (1, 7, 16) mit der wenigstens einen Öffnung (18, 19) um einen Teilbereich eines zu schweißenden Werkstücks (6, 12) derart anordbar ist, dass die wenigstens eine Öffnung (18, 19) der Arbeitskammer (1, 7, 16) mit dem Werkstück (6, 12) oder zumindest einem Teilbereich des Werkstücks (6, 12) verschließbar ist.

## Beschreibung

Die vorliegende Erfindung betrifft ein Verfahren zum Schweißen eines Werkstücks mittels wenigstens eines Elektronenstrahls.

Ferner betrifft die vorliegende Erfindung eine Vorrichtung zum Elektronenstrahlschweißen von Werkstücken mit wenigstens einer Einrichtung zur Erzeugung wenigstens eines Elektronenstrahls, wenigstens einer Einrichtung zur Formung und/oder Führung des wenigstens einen Elektronenstrahls und einer Arbeitskammer, in welcher der Schweißvorgang erfolgt. Ein Werkstück im Sinne der vorliegenden Erfindung kann einteilig oder mehrteilig sein. Insbesondere ist unter dem Schweißen eines Werkstücks das unlösbare Verbinden zweier Teile zu verstehen.

Verfahren und Vorrichtungen zum Elektronenstrahlschweißen sind im Stand der Technik bekannt. Beim Elektronenstrahlschweißen wird im Hochvakuum ein Elektronenstrahl erzeugt, der mittels elektromagnetischer Felder geformt wird und mittels elektromagnetischer Felder geführt werden kann. Die elektromagnetischen Felder werden dabei üblicherweise durch entsprechende Spulenanordnungen ausgebildet.

Ein großer Vorteil des Elektronenstrahlschweißens besteht darin, dass sich ein breites Spektrum von Blechdicken schweißen lässt, wobei die Schweißtiefen zwischen etwa 0,1 mm und etwa 300 mm betragen können. Insbesondere bei groß dimensionierten Werkstücken weist das Elektronenstrahlschweißen aufgrund der erzielbaren Schweißtiefe Zeitvorteile gegenüber anderen Schweißverfahren auf. Darüber hinaus lassen sich Werkstücke beim Elektronenstrahlschweißen mit besonders schmaler Schweißnaht schweißen. Sind die zu bearbeitenden Werkstücke vor dem Schweißen entsprechend vorbehandelt, insbesondere hinsichtlich einer Reinigung und hohen Passgenauigkeit an den vorgesehenen Schweißstellen, sind zudem besonders reine Schweißnähte realisierbar, die keine oder nur geringfügige Schweißnahtunregelmäßigkeiten aufweisen.

Diese Vorteile des Elektronenstrahlschweißens sind insbesondere auf die hohe Leistungsdichte im Fokuspunkt des Elektronenstrahls zurückzuführen, die wesentlich höher ist, als beispielsweise die Leistungsdichte beim Lichtbogenschweißen.

Da sich der Elektronenstrahl beim Auftreffen auf Moleküle aufweitet und die Energiedichte des Elektronenstrahls dabei abnimmt, weisen Vorrichtungen zum Elektronenstrahlschweißen üblicherweise eine Arbeitskammer auf, in der sich ein Vakuum erzeugen lässt. Vakuum meint dabei, wie auch bei nachfolgendem Gebrauch des Begriffs, ein gegenüber dem Atmosphärendruck bei Normalbedingungen wesentlich geringerer Druck und nicht zwangsläufig im strengen Sinn einen leeren Raum. In die Arbeitskammer der Vorrichtung zum Elektronenstrahlschweißen wird das Werkstück für den Schweißprozess vollständig eingebracht und die Arbeitskammer vor dem Schweißvorgang evakuiert. Groß dimensionierte Werkstücke erfordern insofern eine entsprechend groß dimensionierte Arbeitskammer. Hieraus resultiert der Nachteil eines großen Raumbedarfs sowie langer Nebenzeiten, da die für das Erzeugen des Vakuums in der Arbeitskammer erforderliche Zeit mit zunehmender Raumgröße zunimmt. Um diesen Nachteil zumindest teilweise zu kompensieren werden zum Teil aufwendige und kostenintensive Kammersysteme mit entsprechenden Schleusenoder Doppelkammern errichtet, wodurch sich der erforderliche Raumbedarf vervielfacht.

Ein weiterer Nachteil von im Stand der Technik bekannten Vorrichtungen zum Elektronenstrahlschweißen besteht darin, dass für zu schweißende groß dimensionierte Werkstücke aufgrund der erforderlichen Kammergröße nur wenige geeignet dimensionierte Anlagen und somit geringe Kapazitäten zum Schweißen von derartigen Werkstücken zur Verfügung stehen. Hieraus resultieren nachteiligerweise lange Wartezeiten und weite Transportwege, um derartige Werkstücke schweißen lassen zu können.

Ein Lösungsansatz mit dem versucht wird, den oben genannten Nachteilen des Elektronenschweißverfahrens zu begegnen, ist das sogenannte Elektronenstrahlschweißen an Atmosphärendruck (NV-EBW; NV-EBW: engl. für Non-Vacuum Electron Beam Welding). Beim Schweißen an Atmosphärendruck findet der Schweißvorgang nicht in einer Arbeitskammer statt, sondern der im Vakuum erzeugte Elektronenstrahl wird durch mehrerer Kammern geführt, in denen der Druck stufenweise erhöht wird, bevor der Elektronenstrahl an Atmosphärendruck auf das zu schweißende Werkstück trifft. Nachteilig bei diesem Schweißverfahren ist, dass nicht die Schweißtiefen erzielt werden können, die beim Schweißen unter Vakuum realisierbar sind. Darüber hinaus werden weniger reine Schweißnähte erzielt als beim Schweißen im Vakuum und die Anzahl der Schweißnahtunregelmäßigkeiten ist gegenüber dem Schweißen im Vakuum erhöht.

Vor diesem Hintergrund liegt der vorliegenden Erfindung die Aufgabe zugrunde, ein verbessertes Verfahren zum Schweißen eines Werkstücks mittels wenigstens eines Elektronenstrahls bereitzustellen, welches insbesondere die Vorteile des Elektronenstrahlschweißens im Vakuum aufweist und dabei dessen Nachteile zumindest weitestgehend beseitigt.

Des Weiteren liegt der vorliegenden Erfindung die Aufgabe zugrunde, eine verbesserte Vorrichtung zum Elektronenstrahlschweißen von Werkstücken bereitzustellen, welche insbesondere die Vorteile des Elektronenstrahlschweißens im Vakuum aufweist und dabei insbesondere hinsichtlich des erforderlichen Raumbedarfs und hinsichtlich der Nebenzeiten verbessert ist.

Zur technischen Lösung der Aufgabe wird mit der vorliegenden Erfindung ein Verfahren zum Schweißen eines Werkstücks mittels wenigstens eines Elektronenstrahls vorgeschlagen, welches dadurch gekennzeichnet ist, dass eine wenigstens eine Öffnung aufweisende Arbeitskammer mit der wenigstens einen Öffnung um einen Teilbereich des zu schweißenden Werkstücks derart angeordnet wird, dass die wenigstens eine Öffnung der Arbeitskammer von dem Werkstück oder zumindest einem Teilbereich des Werkstücks verschlossen wird, in der mit dem einen Werkstück beziehungsweise dem Teilbereich des Werkstücks verschlossenen Arbeitskammer ein gegenüber dem atmosphärischen Druck verringerter Druck, vorzugsweise ein Vakuum, erzeugt wird, und der wenigstens eine Elektronenstrahl derart geformt und geführt wird, dass der wenigstens eine Elektronenstrahl innerhalb der geschlossenen Arbeitskammer auf das zu schweißende Werkstück auftrifft.

Der Erfindung liegt die Erkenntnis zugrunde, dass die Arbeitskammer bei einem erfindungsgemäßen Verfahren gegenüber bisher im Stand der Technik bekannten Arbeitskammern von Elektronenstrahlschweißanlagen insbesondere bei groß dimensionierten Werkstücken, wie Wellen mit großem Umfang, mit einem wesentlich geringeren Volumenraum ausbildbar ist, wenn die Arbeitskammer eine Öffnung aufweist, und die Arbeitskammer mit der Öffnung auf das Werkstück aufgebracht wird, wobei nicht das gesamte Werkstück sondern im Wesentlichen der zu schweißende Bereich, oder zumindest ein Teilbereich des zu schweißenden Bereichs in der Arbeitskammer angeordnet ist. Vorteilhafterweise ist durch die erfindungsgemäße Vorrichtung der erforderliche Raumbedarf für die Vorrichtung zum Elektronenstrahlschweißen gegenüber im Stand der Technik bekannten Vorrichtungen zum Elektronenstrahlschweißen im Vakuum wesentlich reduziert. Darüber hinaus ist die Arbeitskammer der erfindungsgemäßen Vorrichtung vorteilhafterweise wesentlich schneller evakuierbar als bisher im Stand der Technik bekannte Arbeitskammern, in welche ein zu schweißendes Werkstück vollständig einbringbar sind. Hieraus resultieren vorteilhafterweise verkürzte Nebenzeiten und somit eine verbesserte Auslastung einer Vorrichtung zum Elektronenstrahlschweißen.

Die Anordnung der Arbeitskammer auf dem Werkstück erfolgt bei der erfindungsgemäßen Vorrichtung derart, dass die Arbeitskammer von dem Werkstück oder zumindest einem Teilbereich des Werkstücks, beispielsweise von einem Abschnitt der Umfangsfläche des Werkstücks, verschlossen wird. Vorzugsweise wird die Arbeitskammer dabei zumindest weitestgehend Luftdicht verschlossen. Die Arbeitskammer der erfindungsgemäßen Vorrichtung gilt aber insbesondere auch dann als verschlossen im Sinne der Erfindung, wenn zwischen dem zu schweißenden Werkstück und der Arbeitskammer und/oder zwischen einzelnen Teilen eines Werkstücks, insbesondere zwischen Teilen die erst durch das Schweißen zu einem Werkstück verbunden werden, Spalte oder dergleichen Kleinstöffnungen ausgebildet sind, die Arbeitskammer somit also weitestgehend verschlossen ist.

Vorteilhafterweise ist der Druck in dem Volumenraum der verschlossenen Arbeitskammer, also in dem Raum, der durch die Arbeitskammer und das Werkstück gebildet wird, aufgrund der geringen Größe wesentlich schneller gegenüber dem Atmosphärendruck unter Normalbedingungen, das heißt insbesondere gegenüber dem Luftdruck der Umgebung, in der das erfindungsgemäße Verfahren ausgeführt wird, reduzierbar, als in Arbeitskammern in die das Werkstück vollständig eingebracht wird. Vorteilhafterweise sind großvolumige Schleusenkammersysteme entbehrlich, wie sie bislang bei Elektronenstrahlschweißverfahren eingesetzt werden. Durch den gegenüber dem Atmosphärendruck (10³ mbar) verminderten Druck in der Arbeitskammer, weitet sich der wenigstens eine Elektronenstrahl in der Arbeitskammer vorteilhafterweise nicht beziehungsweise nur geringfügig auf. Vorzugsweise beträgt der Druck in der Arbeitskammer zwischen 10⁻⁴ mbar und 10⁻² mbar (Vakuum). Das Einstellen niedrigerer Drücke ist wünschenswert aber technisch aufwendig zu realisieren. Auch wenn sich der Strahl bei Drücken, die größer als 10⁻² mbar sind stärker aufweitet, sind bei derartigen Drücken, beispielsweise bei einem Druck von 1 mbar, dennoch bessere Schweißergebnisse erzielbar als mit dem NV-EBW.

In der Arbeitskammer können erfindungsgemäß ein oder mehrerer Elektronenstrahlen genutzt werden. Ferner sind zum Schweißen eines Werkstücks eine oder mehrere Arbeitskammern einsetzbar. Eine vorteilhafte Ausführungsvariante sieht den Einsatz von zwei Elektronenstrahlen vor, um ein Magnetisieren des Werkstücks zu verhindern.

Eine Ausführungsvariante des erfindungsgemäßen Verfahrens sieht vor, dass die wenigstens eine Öffnung der Arbeitskammer von dem Teilbereich eines zu schweißenden Werkstücks, um den die Arbeitskammer mit der wenigstens einen Öffnung angeordnet wird, verschlossen wird. Erfindungsgemäß ist dabei insbesondere vorgesehen, dass der Teilbereich eines zu schweißenden Werkstücks, um den die Arbeitskammer mit der wenigstens einen Öffnung angeordnet ist, ein Flächensegment der Oberfläche eines zu schweißenden Werkstücks ist.

Bei einer weiteren vorteilhaften Ausführungsvariante des erfindungsgemäßen Verfahrens ist vorgesehen, dass die Arbeitskammer während des Schweißvorganges zumindest teilweise relativ zu dem zu schweißenden Werkstück bewegt wird. Hierbei sind mehrere Varianten vorgesehen, von denen nachfolgend einige besonders bevorzugte Varianten genannt werden. Bei einer ersten Variante bleibt die wenigstens eine Öffnung der Arbeitskammer mit dem Werkstück starr verbunden, während ein Teil der Arbeitskammer bewegt wird. Bei einer weiteren Variante wird die Arbeitskammer mit der wenigstens einen Öffnung über das Werkstück bewegt. Bei einer weiteren Variante wird das Werkstück entlang der wenigstens einen Öffnung der Arbeitskammer bewegt. In einer weiteren Variante wird die wenigstens eine Öffnung der Arbeitskammer über das Werkstück bewegt, während die Arbeitskammer zumindest teilweise nicht bewegt wird.

Zum Schweißen des Werkstücks sieht eine bevorzugte Variante vor, dass die Arbeitskammer mit der wenigstens einen Öffnung auf dem Werkstück geführt wird. Die Arbeitskammer ist dabei vorteilhafterweise so gestaltet, dass sie sich mit dem Schweißbad relativ zum Werkstück auf der Nahtvorbereitung mitbewegt. Die Erfindung nutzt dabei die Erkenntnis, dass trotz der durch die Bewegung der Arbeitskammer entstehende Leckagen und/oder obwohl die wenigstens eine Öffnung der Arbeitskammer mitunter nicht gänzlich luftdicht von dem Werkstück beziehungsweise von einem Teilbereich des Werkstücks verschlossen ist, ein entsprechendes Vakuum beziehungsweise Hochvakuum erzeugt werden kann, vorzugsweise durch einen entsprechend dimensionierten Unterdruckerzeuger, besonders bevorzugt durch eine oder mehrere Vakuumpumpen.

Bei einer weiteren vorteilhaften Ausführungsvariante des erfindungsgemäßen Verfahrens wird die Arbeitskammer und/oder die wenigstens eine Öffnung der Arbeitskammer auf dem zu schweißenden Werkstück fixiert. Hierdurch wird die Arbeitskammer beziehungsweise die wenigstes eine Öffnung der Arbeitskammer vorteilhafterweise verbessert mit dem Werkstück verbunden, sodass ein gegenüber dem Atmosphärendruck verminderter Druck verbessert erzeugbar ist.

Zur technischen Lösung der eingangs genannten Aufgabe wird mit der vorliegenden Erfindung ferner eine Vorrichtung zum Elektronenstrahlschweißen von Werkstücken mit wenigstens einer Einrichtung zur Erzeugung wenigstens eines Elektronenstrahls, wenigstens einer Einrichtung zur Formung und/oder Führung des wenigstens einen Elektronenstrahls und einer Arbeitskammer, in welcher der Schweißvorgang erfolgt, vorgeschlagen, wobei die Arbeitskammer wenigstens eine Öffnung aufweist, und die Arbeitskammer mit der wenigstens einen Öffnung um einen Teilbereich eines zu schweißenden Werkstücks derart anordbar ist, dass die wenigstens eine Öffnung der Arbeitskammer mit dem Werkstück oder zumindest einem Teilbereich des Werkstücks verschließbar ist. Vorteilhafterweise ist mit der erfindungsgemäßen Vorrichtung ein erfindungsgemäßes Verfahren zum Schweißen eines Werkstücks mittels wenigstens eines Elektronenstrahls ausführbar. Vorzugsweise ist die wenigstens eine Öffnung der Arbeitskammer zumindest weitestgehend Luftdicht verschließbar. Die Arbeitskammer der erfindungsgemäßen Vorrichtung gilt aber insbesondere auch dann als verschlossen im Sinne der Erfindung, wenn zwischen dem zu schweißenden Werkstück und der Arbeitskammer und/oder zwischen einzelnen Teilen eines Werkstücks, insbesondere zwischen Teilen die erst durch das Schweißen zu einem Werkstück verbunden werden, Spalte oder dergleichen Kleinstöffnungen ausgebildet sind, die Arbeitskammer der Vorrichtung somit also weitestgehend verschlossen ist.

Insbesondere im Hinblick auf die Verschließbarkeit der Öffnung der Arbeitskammer und/oder die Geometrie des zu schweißenden Werkstücks ist die Arbeitskammer vorteilhafterweise verschiedenartig ausgestaltbar. Als besonders vorteilhaft haben sich insbesondere kastenförmig, glockenförmig und/oder manschettenartig ausgestaltete Arbeitskammern erwiesen. Vorzugsweise ist die Arbeitskammer mehrteilig ausgebildet und weist vorteilhafterweise im Bereich der von dem Werkstück beziehungsweise dem Teilbereich des Werkstücks zu verschließenden Öffnung Mittel auf, die das Auftreten von Spalten oder dergleichen Kleinstöffnungen reduzieren oder verhindern. Eine weitere vorteilhafte mehrteilig ausgebildete Arbeitskammer, insbesondere zur Verwendung beim Schweißen von Wellen, weist zwei Öffnungen auf, die vorteilhafteniveise um den Umfang der Welle anordbar sind.

Eine weitere vorteilhafte Ausgestaltungsform der Erfindung sieht vor, dass die Arbeitskammer in wenigstens einer weiteren Kammer angeordnet ist, wobei die wenigstens eine weitere Kammer jeweils wenigstens eine Öffnung aufweist, und die wenigstens eine weitere Kammer mit der jeweils wenigstens einen Öffnung um einen Teilbereich eines zu schweißenden Werkstücks derart anordbar ist, dass jeweils die wenigstens eine Öffnung der wenigstens einen weiteren Kammer mit dem Werkstück oder zumindest einem Teilbereich des Werkstücks verschließbar ist. In Abhängigkeit davon, wie das zu schweißende Werkstück geformt ist, kann die wenigstens eine Öffnung der wenigstens einen weiteren Kammer größer, gleich groß oder kleiner als die wenigstens eine Öffnung der Arbeitskammer ausgestaltet sein. Eine kleinere Öffnung der wenigstens einen weiteren Kammer ist vorteilhafterweise dann vorzusehen, wenn ein sich konisch verjüngendes Werkstück zu schweißen ist. Bei einer weiteren vorteilhaften Ausgestaltungsform der erfindungsgemäßen Vorrichtung ist die wenigstens eine Öffnung der Arbeitskammer bezüglich der Größe der Öffnung einstellbar, besonders bevorzugt bei einer manschettenartig ausgebildeten Arbeitskammer. Vorzugsweise ist die Arbeitskammer zusammen mit der wenigstens einen weiteren Kammer als Kammersystem ausgebildet.

Eine weitere Ausgestaltungsform der erfindungsgemäßen Vorrichtung sieht vor, dass die wenigstens eine Öffnung der Arbeitskammer und/oder die jeweils wenigstens eine Öffnung der wenigstens einen weiteren Kammer mit dem Teilbereich eines zu schweißenden Werkstücks verschließbar ist, um den die Arbeitskammer mit der wenigstens einen Öffnung beziehungsweise die wenigstens eine weitere Kammer mit der wenigstens einen Öffnung angeordnet ist. Der Teilbereich des Werkstücks, der die Öffnung der Arbeitskammer beziehungsweise der wenigstens einen weiteren Kammer verschließt, ist bei dieser Ausgestaltungsform vorzugsweise ein Flächensegment auf der Oberfläche des zu schweißenden Werkstücks. Vorteilhafterweise ist erfindungsgemäß vorgesehen, dass der Teilbereich, um den die Arbeitskammer mit der wenigstens einen Öffnung angeordnet ist, innerhalb des Teilbereichs liegt, um den die wenigstens eine weitere Kammer angeordnet ist. In einer speziellen Ausgestaltungsform der Erfindung sind die Teilbereiche zumindest im Wesentlichen identisch.

Bei einer weiteren besonders vorteilhaften Ausgestaltungsform der erfindungsgemäßen Vorrichtung ist die Arbeitskammer und/oder die wenigstens eine weitere Kammer bei verschlossener Öffnung der Arbeitskammer beziehungsweise bei verschlossener Öffnung der wenigstens einen weiteren Kammer, zumindest teilweise relativ zu dem zu schweißenden Werkstück bewegbar. Weisen die Arbeitskammer beziehungsweise die wenigstens eine weitere Kammer mehr als eine Öffnung auf, heißt das, dass die Arbeitskammer und/oder die wenigstens eine weitere Kammer verschlossen ist, wenn alle Öffnungen der Arbeitskammer beziehungsweise alle Öffnungen der wenigstens einen weiteren Kammer verschlossen sind. Erfindungsgemäß sind mehrere Varianten vorgesehen, wie die Relativbewegung der Arbeitskammer und/oder die Relativbewegung der wenigstens einen weiteren Kammer beziehungsweise die Relativbewegung eines Teils der Arbeitskammer und/oder die Relativbewegung eines Teils der wenigstens einen weiteren Kammer zu dem zu schweißenden Werkstück durchführbar ist. Die nachfolgend genannten Varianten werden dabei beispielhaft und nicht abschließend angeführt. Bei einer ersten Variante ist die wenigstens eine Öffnung der Arbeitskammer und/oder die wenigstens eine Öffnung der wenigstens einen weiteren Kammer mit dem Werkstück im Wesentlichen starr verbunden, während ein Teil beziehungsweise ein Teilbereich der Arbeitskammer und/oder ein Teil beziehungsweise ein Teilbereich der wenigstens einen weiteren Kammer bewegbar ist. Bei einer weiteren Variante ist die Arbeitskammer mit der wenigstens einen Öffnung und/oder die wenigstens eine weitere Kammer mit der jeweils wenigstens einen weiteren Öffnung über das Werkstück bewegbar. Bei einer weiteren Variante ist die Arbeitskammer mit der wenigstens einen Öffnung und/oder die wenigstens eine weitere Kammer mit der jeweils wenigstens einen weiteren Öffnung im Wesentlichen starr ausgebildet, wobei das Werkstück entlang der wenigstens einen Öffnung der Arbeitskammer und/oder entlang der jeweils wenigstens einen Öffnung der wenigstens einen weiteren Kammer bewegbar ist. In einer weiteren Variante ist die wenigstens eine Öffnung der Arbeitskammer und/oder die jeweils wenigstens eine Öffnung der wenigstens einen weiteren Arbeitskammer über das Werkstück bewegbar, während die Arbeitskammer und/oder die wenigstens eine weitere Kammer zumindest teilweise nicht bewegbar ist. Eine besonders vorteilhafte Ausgestaltungsform der Vorrichtung sieht vor, dass die Arbeitskammer in einer weiteren Kammer angeordnet ist, wobei die eine weitere Kammer im wesentlichen starr auf dem zu schweißenden Werkstück anordbar ist und die Arbeitskammer mit der wenigstens einen Öffnung innerhalb der weiteren Kammer über das zu schweißende Werkstück geführt werden kann.

Besonders bevorzugt ist in der Arbeitskammer und/oder in der wenigstens einen weiteren Kammer bei verschlossener Öffnung der Arbeitskammer beziehungsweise bei verschlossener Öffnung der wenigstens einen weiteren Kammer ein gegenüber dem atmosphärischen Druck verminderter Druck, vorzugsweise ein Vakuum, einstellbar. Vorteilhafterweise ist der Druck stufenlos von 10³ mbar (Atmosphärendruck) auf einen Druck von weniger als 10⁻⁴ mbar einstellbar. Vorteilhafterweise weist die erfindungsgemäße Vorrichtung hierzu wenigstens eine Einrichtung zur Erzeugung eines gegenüber dem Atmosphärendruck verminderten Drucks, vorzugsweise eines Vakuums, in der Arbeitskammer und/oder in der wenigstens einen weiteren Kammer auf. Vorzugsweise weist die Arbeitskammer beziehungsweise die wenigstens eine weitere Kammer hierzu wenigstens eine Zuleitung auf, an die vorteilhafterweise wenigstens eine Vakuumpumpe zur Erzeugung des gegenüber dem Atmosphärendruck verminderten Drucks anschließbar ist. Die Drücke in der Arbeitskammer und/oder in der wenigstens einen weiteren Kammer sind dabei vorteilhafterweise unabhängig voneinander einstellbar. Vorteilhafterweise ist in einer weiteren Ausgestaltungsform der erfindungsgemäßen Vorrichtung zum Elektronenstrahlschweißen der Arbeitskammer wenigstens eine weitere Kammer vorgeordnet, wobei in der wenigstens einen weiteren vorgeordneten Kammer ein gegenüber dem Druck in der Arbeitskammer verminderter Druck einstellbar ist. Auf diese Weise ist der Druck vorteilhafterweise von der Erzeugung des Elektronenstrahls im Hochvakuum bis zum Auftreffen des Elektronenstrahls auf das Werkstück innerhalb der Arbeitskammer stufenartig erhöhbar.

Eine weitere vorteilhafte Ausgestaltung der erfindungsgemäßen Vorrichtung weist Mittel und/oder eine Einrichtung auf, mittels der die Arbeitskammer und/oder die wenigstens eine weitere Kammer auf dem zu schweißenden Werkstück fixierbar ist. Als Mittel zum Fixieren sind insbesondere solche Mittel vorgesehen, die die Arbeitskammer beziehungsweise die wenigstens eine weitere Kammer mit dem zu schweißenden Werkstück verbinden, beispielsweise nach Art einer Schraubzwinge oder nach Art einer Schlauchklemme. Darüber hinaus ist erfindungsgemäß vorgesehen, dass die Arbeitskammer mit der wenigstens einen Öffnung mittels einer Einrichtung, die vorzugsweise mechanisch oder pneumatisch ausgestaltet ist, an das zu schweißende Werkstück gepresst wird. Insbesondere sind erfindungsgemäß auch Kombinationen aus Mitteln und Einrichtungen zum Fixieren der Arbeitskammer auf dem zu schweißenden Werkstück vorgesehen. Vorteilhafterweise ist durch das Fixieren der Arbeitskammer auf dem Werkstück beziehungsweise durch das Anpressen der Arbeitskammer an das Werkstück die Arbeitskammer weitestgehend Luftdicht mit dem Werkstück verschließbar, wodurch in der Arbeitskammer verbessert ein gegenüber dem Atmosphärendruck verminderter Druck einstellbar ist.

Vorteilhafterweise ist die Arbeitskammer und/oder sind Teile der Arbeitskammer und/oder ist die wenigstens eine weitere Kammer und/oder sind Teile der wenigstens einen weiteren Kammer auswechselbar. Insbesondere sind unterschiedlich ausgestaltete Arbeitskammern und/oder unterschiedlich ausgestaltete weitere Kammern, insbesondere kastenförmig, glockenförmig und/oder manschettenartig ausgestaltete Arbeitskammern und/oder weitere Kammern an der Vorrichtung zum Elektronenstrahlschweißen anordbar. Die Auswahl der Form der Arbeitskammer und/oder der wenigstens einen weiteren Kammer erfolgt dabei vorteilhafterweise in Abhängigkeit von der Geometrie des zu schweißenden Werkstücks. Vorteilhafterweise ist vorgesehen, dass nur der Bereich der Arbeitskammer und/oder der Bereich der wenigstens einen weiteren Kammer an den sich eine Öffnung der Arbeitskammer beziehungsweise eine Öffnung der wenigstens einen weiteren Kammer anschließt, austauschbar ist, wodurch die Arbeitskammer und/oder die wenigstens eine weitere Kammer besonders einfach an unterschiedlich geformte Werkstücke anpassbar sind. Vorteilhafterweise ist insbesondere die Arbeitskammer und/oder sind Teile aus dem Inneren der Arbeitskammer austauschbar, an denen sich beim Schweißen entstehende Dämpfe ablagern.

Vorteilhafterweise ist die Arbeitskammer und/oder sind Teile der Arbeitskammer und/oder ist die wenigstens eine weitere Kammer und/oder sind Teile der wenigstens einen weiteren Kammer zumindest teilweise aus flexiblem Material, beispielsweise Silikon oder Kautschuk, sodass die Kammern in dieser Ausgestaltungsvariante zumindest nicht vollständig starr ausgebildet sind. Hierdurch sind vorteilhafterweise Teile der Arbeitskammer gegeneinander verdrehbar.

Eine weitere besonders vorteilhafte Ausgestaltungsform der erfindungsgemäßen Vorrichtung weist eine Einrichtung zur Steuerung und/oder Regelung der wenigstens einen Einrichtung zur Erzeugung wenigstens eines Elektronenstrahls, eine Einrichtung zur Steuerung und/oder Regelung der wenigstens einen Einrichtung zur Formung und/oder Führung des wenigstens einen Elektronenstrahls, eine Einrichtung zur Steuerung und/oder Regelung des Drucks in der Arbeitskammer, eine Einrichtung zur Steuerung und/oder Regelung des Drucks in der wenigstens einen weiteren Kammer, eine Einrichtung zur Steuerung und/oder Regelung der relativen Bewegung der Arbeitskammer zu dem Werkstück, eine Einrichtung zur Steuerung und/oder Regelung der relativen Bewegung der wenigstens einen weiteren Kammer zu dem Werkstück, eine Einrichtung zur Steuerung und/oder Regelung der Fixierung der Arbeitskammer auf dem zu schweißenden Werkstück und/oder eine Einrichtung zur Steuerung und/oder Regelung der wenigstens einen weiteren Kammer auf dem zu schweißenden Werkstück. Vorteilhafterweise ermöglicht die wenigstens eine Einrichtung zur Steuerung und/oder Regelung beziehungsweise eine Kombination von Einrichtungen zur Steuerung und/oder Regelung einen zumindest teilweise automatischen Betrieb der erfindungsgemäßen Vorrichtung. Darüber hinaus ist vorteilhafterweise insbesondere der Druck in der Arbeitskammer regelbar, sodass dieser selbst bei Vorhandensein von Kleinstöffnungen bei verschlossener Arbeitskammer und/oder beim Führen der verschlossenen Arbeitskammer auf dem Werkstück - wobei sich der Teilbereich des Werkstücks, der die wenigstens eine Öffnung der Arbeitskammer verschließt, ändern kann - auf einem weitestgehend konstanten Niveau einregelbar ist.

Weitere Einzelheiten, Merkmale und Vorteile der Erfindung werden nachfolgend anhand der in den Figuren der Zeichnung dargestellten Ausführungsbeispiele der Erfindung näher erläutert. Dabei zeigt:

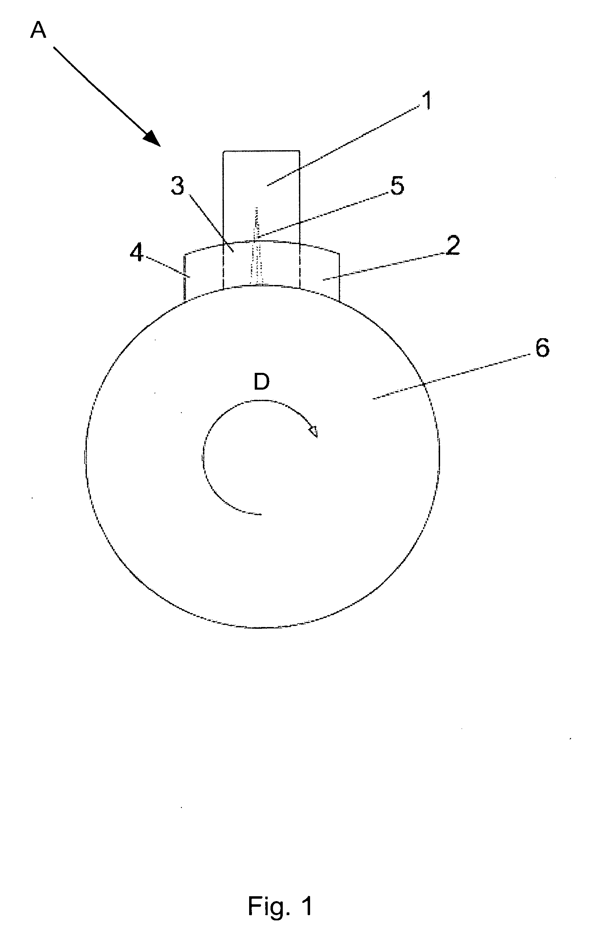

- Fig. 1: eine Anordnungsskizze in Seitenansicht zur Illustration des grundlegenden Prinzips und des prinzipiellen Aufbaus eines Ausführungsbeispiels einer erfindungsgemäßen Vorrichtung zum Elektronenstrahlschweißen,

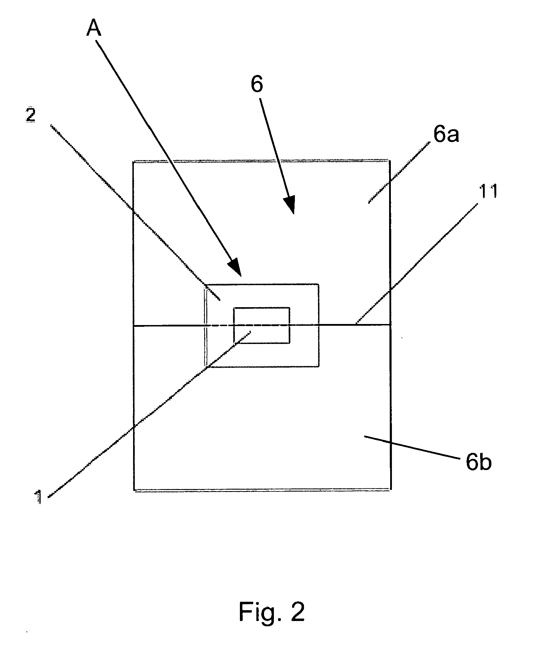

- Fig. 2: eine Anordnungsskizze in Draufsicht zur Illustration des grundlegenden Prinzips und des prinzipiellen Aufbaus eines Ausführungsbeispiels einer erfindungsgemäßen Vorrichtung zum Elektronenstrahlschweißen nach Fig. 1,

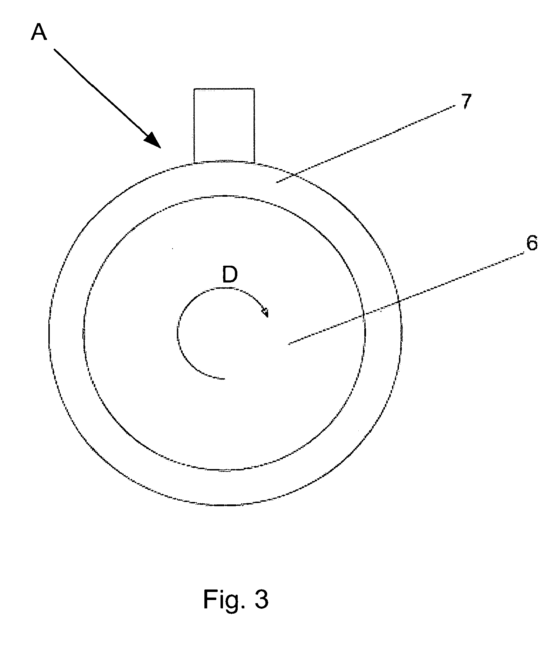

- Fig. 3: eine Anordnungsskizze in Seitenansicht zur Illustration des grundlegenden Prinzips und des prinzipiellen Aufbaus eines weiteren Ausführungsbeispiels einer erfindungsgemäßen Vorrichtung zum Elektronenstrahlschweißen mit einer ein Werkstück umlaufenden Kammer,

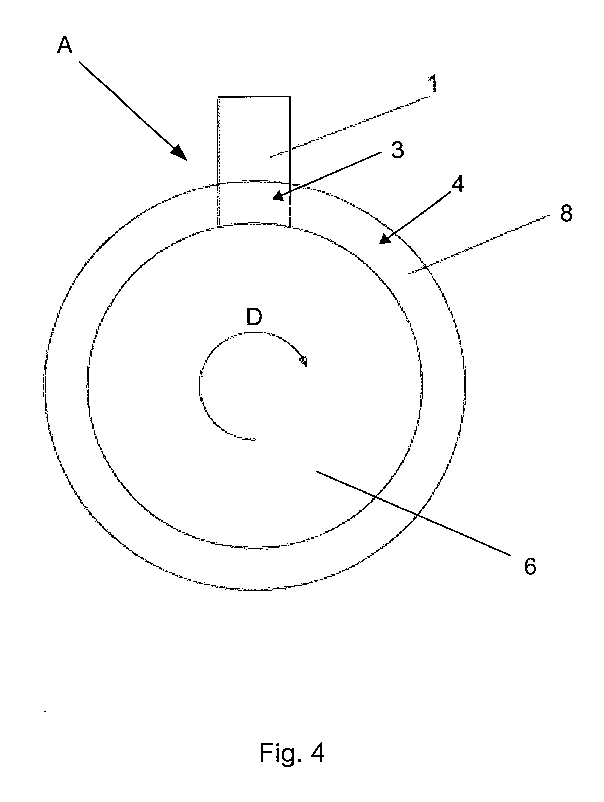

- Fig. 4: eine Anordnungsskizze in Seitenansicht zur Illustration des grundlegenden Prinzips und des prinzipiellen Aufbaus eines weiteren Ausführungsbeispiels einer erfindungsgemäßen Vorrichtung zum Elektronenstrahlschweißen, wobei die Vorrichtung ein Kammersystem bestehend aus einer Arbeitskammer und einer weiteren, das Werkstück umlaufenden Kammer aufweist,

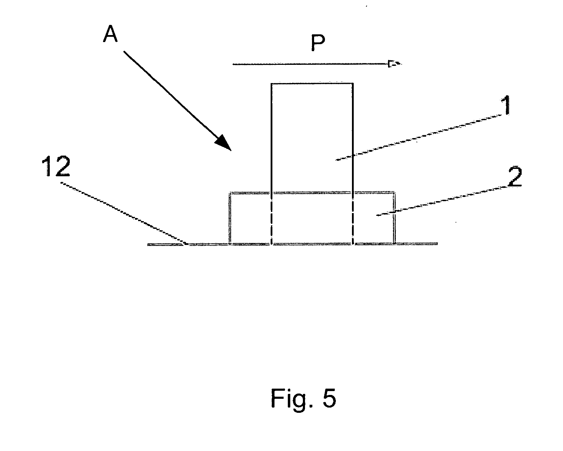

- Fig.5: eine Anordnungsskizze in Seitenansicht zur Illustration des grundlegenden Prinzips und des prinzipiellen Aufbaus eines weiteren Ausführungsbeispiels einer erfindungsgemäßen Vorrichtung zum Elektronenstrahlschweißen beim Schweißen einer linearen Schweißnaht an dem Stumpfstoß zweier Stahlbleche,

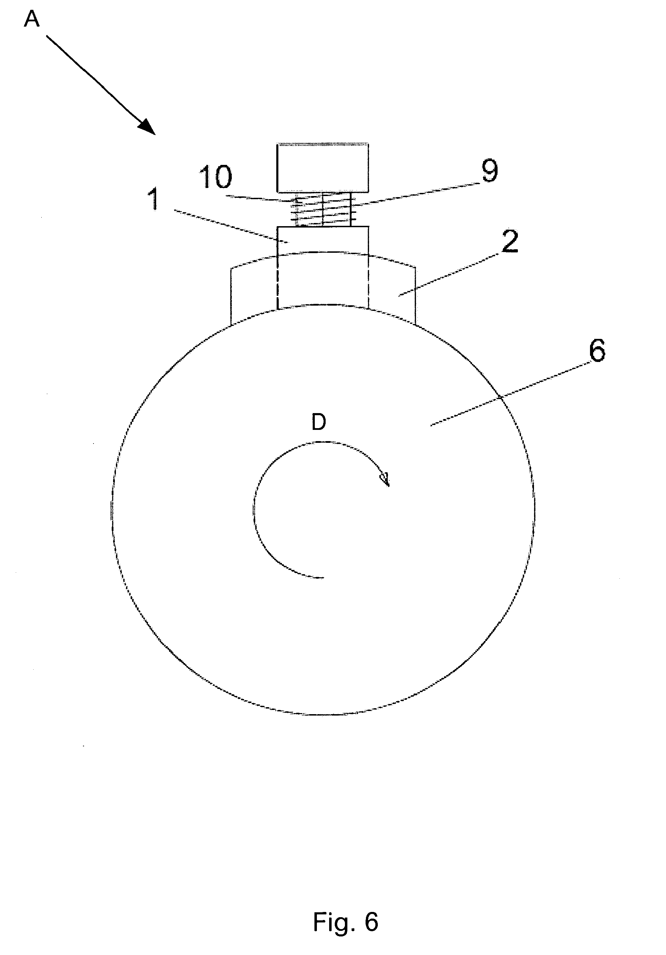

- Fig. 6: eine Anordnungsskizze in Seitenansicht zur Illustration des grundlegenden Prinzips und des prinzipiellen Aufbaus eines weiteren Ausführungsbeispiels einer erfindungsgemäßen Vorrichtung zum Elektronenstrahlschweißen, bei der die Arbeitskammer mit einem Mechanismus an ein Werkstück angedrückt wird,

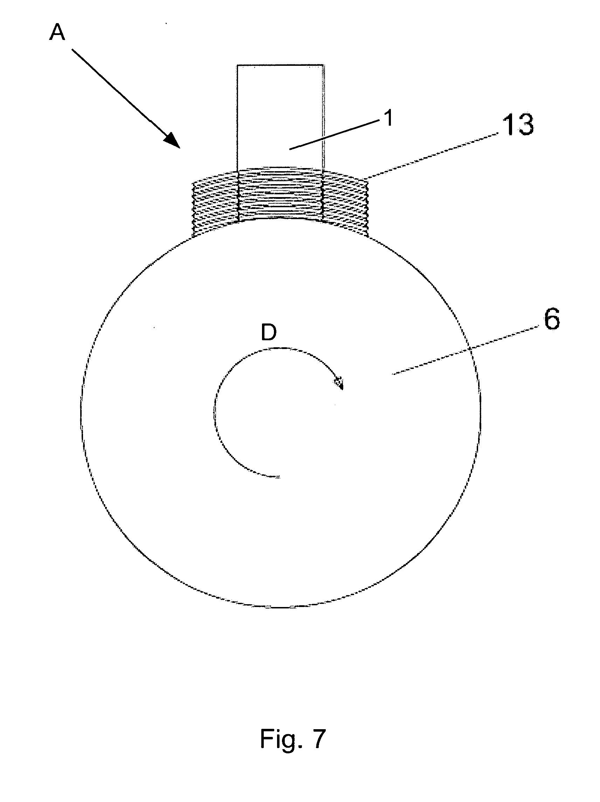

- Fig. 7: eine Anordnungsskizze in Seitenansicht zur Illustration des grundlegenden Prinzips und des prinzipiellen Aufbaus eines weiteren Ausführungsbeispiels einer erfindungsgemäßen Vorrichtung zum Elektronenstrahlschweißen mit einer an unterschiedliche Werkstückoberflächen anpassbaren Arbeitskammer,

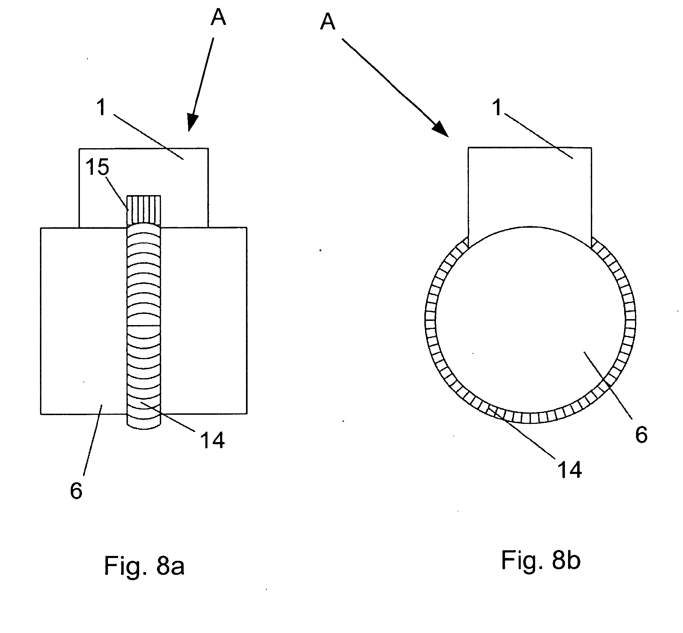

- Fig. 8a: eine Anordnungsskizze in Frontansicht zur Illustration des grundlegenden Prinzips und des prinzipiellen Aufbaus eines weiteren Ausführungsbeispiels einer erfindungsgemäßen Vorrichtung zum Elektronenstrahlschweißen, wobei die Arbeitskammer Mittel zum Anpassen an Unebenheiten auf Werkstückflächen aufweist,
- Fig.8b: eine Anordnungsskizze in Seitenansicht zur Illustration des grundlegenden Prinzips und des prinzipiellen Aufbaus eines Ausführungsbeispiels einer erfindungsgemäßen Vorrichtung zum Elektronenstrahlschweißen nach Fig. 8a, wobei die Arbeitskammer Mittel zum Anpassen an Unebenheiten auf Werkstückflächen aufweist
und

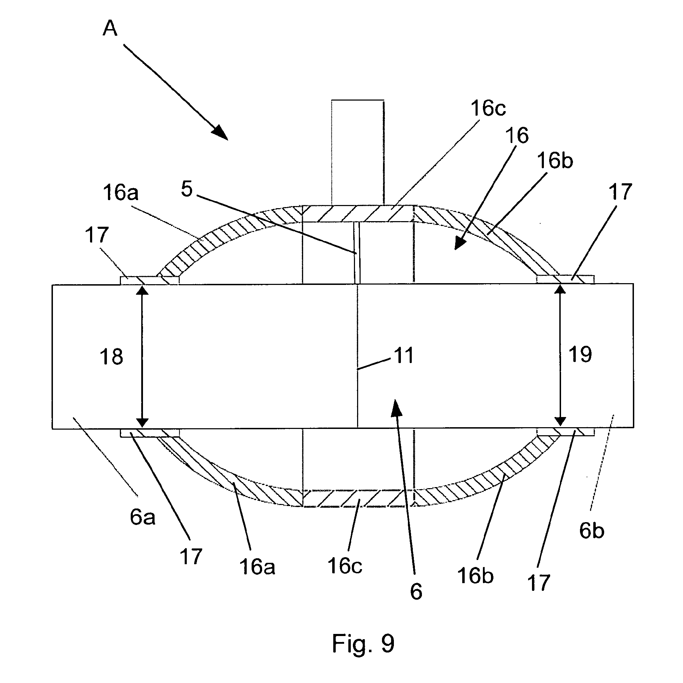

- Fig. 9: eine Anordnungsskizze in geschnittener Frontansicht zur Illustration des grundlegenden Prinzips und des prinzipiellen Aufbaus eines Ausführungsbeispiels einer erfindungsgemäßen Vorrichtung zum Elektronenstrahlschweißen mit einer manschettenartig ausgebildeten Arbeitskammer.

In den Figuren der Zeichnung ist jeweils das erfindungswesentliche Prinzip einer erfindungsgemäßen Vorrichtung dargestellt. Um den Fokus auf das Wesentliche der Erfindung zu richten sind insbesondere die Einrichtung zur Erzeugung wenigstens eines Elektronenstrahls und die Einrichtung zur Formung und/oder Führung des wenigstens einen Elektronenstrahls sowie weitere Komponenten einer Vorrichtung zum Elektronenstrahlschweißen, wie beispielsweise eine Hochspannungsversorgung nicht explizit in den Figuren dargestellt.

In Fig. 1 und Fig. 2 ist in Form einer Anordnungsskizze in Seitenansicht (Fig. 1) beziehungsweise in Draufsicht (Fig. 2) das grundlegende Prinzip und der prinzipielle Aufbau eines Ausführungsbeispiels einer erfindungsgemäßen Vorrichtung zum Elektronenstrahlschweißen A von einem Werkstück 6, welches aus den Teilen 6a und 6b besteht, dargestellt. Die Vorrichtung zum Elektronenstrahlschweißen A von Werkstücken weist eine Einrichtung (nicht explizit dargestellt) zur Erzeugung eines Elektronenstrahls 5, wenigstens eine Einrichtung (nicht explizit dargestellt) zur Formung und/oder Führung des wenigstens einen Elektronenstrahls 5, eine Arbeitskammer 1, nachfolgend auch Schweißkammer genannt, in welcher der Schweißvorgang erfolgt, und eine weitere Kammer 2, nachfolgend auch Schleusenkammer genannt, auf. Die Arbeitskammer 1 ist dabei vorteilhafterweise zumindest teilweise in der weiteren Kammer 2 angeordnet.

Die Arbeitskammer 1 und die weitere Kammer 2 weisen jeweils eine Öffnung auf und sind auf dem Werkstück 6 über der Schweißnahtvorbereitung 11 (in Fig. 1 nicht explizit dargestellt) derart angeordnet, dass die Öffnung der Arbeitskammer 1 und die Öffnung der weiteren Kammer 2 von den Teilbereichen des Werkstücks 6, auf denen die Arbeitskammer 1 beziehungsweise die weitere Kammer 2 aufliegt, verschlossen werden. Das Kammersystem bestehend aus der Arbeitskammer 1 und der weiteren Kammer 2 ist entsprechend der Kontur des zu verschweißenden Werkstücks 6, hier beispielhaft einer Welle, geformt. Die Form des Kammersystems gestattet vorteilhafterweise ein Gleiten der Arbeitskammer 1 und der weiteren Kammer 2 entlang der Schweißnahtvorbereitung 11 auf der Oberfläche des sich in Drehrichtung D drehenden Werkstücks 6. Das heißt, die Arbeitskammer 1 und die weitere Kammer 2 sind relativ zu dem Werkstück 6 bewegbar. Zur Abdichtung des Volumenraums innerhalb der Kammern 1 und 2 können die Berandungen der Öffnungen vorteilhafterweise mit Dichtmitteln, wie Silikon, versehen sein. In einer nicht dargestellten Ausführungsvariante ist darüber hinaus vorgesehen, dass das Werkstück nicht bewegt wird sondern die Arbeitskammer über die Oberfläche entlang einer Schweißnahtvorbereitung bewegt wird.

In der Arbeitskammer 1 ist ein Unterdruck 3, das heißt ein gegenüber dem Atmosphärendruck verminderter Druck, beispielsweise ein Hochvakuum, und in der weiteren Kammer 2 ein von dem Unterdruck 3 abweichender Unterdruck 4, beispielsweise ein Vakuum, eingestellt. Der eingestellte Unterdruck 3 beziehungsweise der eingestellte Unterdruck 4 ermöglicht vorteilhafterweise einen effektiven Elektronenstrahlschweißprozess, da sich der Elektronenstrahl 5 vorteilhafterweise nur geringfügig aufweitet und die Leistungsdichte des Elektronenstrahls 5 hoch ist, insbesondere wesentlich höher als beim NV-EBW. Die weitere Kammer 2 (Schleusenkammer) ist dafür vorgesehen, dass der verminderte Druck 3 in der Arbeitskammer 1 verbessert auf einem konstanten Niveau gehalten werden kann, auch wenn sich zwischen Arbeitskammer 1 und Werkstück 6 Kleinstöffnungen wie Spalte und/oder dergleichen Kleinstöffnungen ausbilden. Der Elektronenstrahl 5 wird derart geführt, dass dieser in der geschlossenen Arbeitskammer 1 (Schweiß-Kammer) auf das zu verschweißende Werkstück 6 auftrifft. Die Führung des Elektronenstrahls 5 ist vorteilhafterweise derart steuer- beziehungsweise regelbar, dass der Elektronenstrahl 5 mit einem Winkel in einem Bereich zwischen 0° und 90° auf die Oberfläche des Werkstücks 6 auftreffen kann.

Wie bereits ausgeführt sind die Arbeitskammer 1 sowie die weitere Kammer 2 unterschiedlich ausgestaltbar. Eine vorteilhafte Ausgestaltungsform einer Arbeitskammer zeigt Fig. 3. Bei dem in Fig. 3 schematisch dargestellten Ausführungsbeispiel einer erfindungsgemäßen Vorrichtung zum Elektronenstrahlschweißen A zeigt eine umlaufende, die Schweißnahtvorbereitung (in Fig. 3 nicht explizit dargestellt) abdeckende Arbeitskammer 7. Die Arbeitskammer 7 ist dabei vorteilhafterweise derart ausgebildet, dass diese auf der Oberfläche des Werkstücks 6 gleiten kann. Durch Drehung D des Werkstücks 6 bewegt sich die Arbeitskammer 7 somit relativ zu dem Werkstück 6. Die umlaufende Arbeitskammer 7 in Fig. 3 hat dabei die gleiche Funktion wie die Arbeitskammer 1 in Fig. 1 oder Fig. 2.

Eine Abwandlung von der in Fig. 3 dargestellten Vorrichtung zum Elektronenstrahlschweißen A zeigt Fig. 4. Die in Fig. 4 dargestellte Vorrichtung besteht aus einem Kammersystem mit einer Arbeitskammer 1 (Schweißkammer), die mit ihrer Öffnung auf einem Teilbereich des zu schweißenden Werkstücks 6 angeordnet ist, und einer den gesamten Umfang des die Schweißnahtvorbereitung (in Fig. 4 nicht explizit dargestellt) aufweisenden Abschnitts des Werkstücks 6 abdeckenden weiteren Kammer 8 (Schleusen-Kammer). Das Werkstück 6 weist vorliegend einen Durchmesser von 40 cm auf. Die Arbeitskammer 1 ist innerhalb der weiteren Kammer 8 angeordnet. Die weitere Kammer 8 hat dabei die gleiche Funktion wie die weitere Kammer 2 in Fig. 1 oder in Fig. 2. Die Arbeitskammer 1 wird mit einem Unterdruck 3 und die weitere Kammer 8 mit einem Unterdruck 4 beaufschlagt, wobei die Drücke 3 und 4 vorzugsweise zwischen Werten von 10⁻⁴ mbar und 10⁻² mbar eingestellt werden. Beide Kammern 1 und 8 gleiten dabei auf dem Werkstück 6. Aufgrund der großen Schweißtiefe der Vorrichtung ist das Werkstück 6 vorteilhafterweise nach einer Drehung D des Werkstücks 6 bereits verschweißt.

Das in Fig. 5 als Anordnungsskizze dargestellte Ausführungsbeispiel einer Vorrichtung zum Elektronenstrahlschweißen A zeigt eine Abwandlung der in den Fig. 1 und Fig. 2 dargestellten Ausführungsbeispiele. Dabei sind die im Wesentlichen kastenförmige Arbeitskammer 1 und die im Wesentlichen kastenförmige weitere Kammer 2 so ausgestaltet, dass die Arbeitskammer 1 und die weitere Kammer 2 über eine gerade verlaufende Schweißnahtvorbereitung (in Fig. 5 nicht explizit dargestellt) auf einem ebenen Werkstück 12, vorliegend einem Blech, in Bewegungsrichtung P führbar sind. Die Öffnung der Arbeitskammer 1 und die Öffnung der einen weiteren Kammer 2 werden dabei mit dem Teilbereich des zu schweißenden Werkstücks 12 verschlossen, um den die Arbeitskammer 1 mit deren Öffnung beziehungsweise die weitere Kammer 2 mit deren Öffnung angeordnet ist. Der Teilbereich, um den die Arbeitskammer 1 mit der Öffnung angeordnet ist, liegt innerhalb des Teilbereichs, um den die eine weitere Kammer 2 angeordnet ist. Die Teilbereiche, die die Kammern 1 und 2 verschließen, ändern sich, wenn die Kammern 1 und 2 relativ zu dem Werkstück 12 bewegt werden.

Das in Fig. 6 als Anordnungsskizze dargestellte weitere Ausführungsbeispiel für eine erfindungsgemäße Vorrichtung zum Elektronenstrahlschweißen A ist eine gegenüber den in Fig. 1 und Fig. 2 gezeigten Ausführungsbeispielen modifizierte Vorrichtung. Die Vorrichtung A weist eine Einrichtung 9, vorliegend eine zylindrische Wendel, auf, mit der die Arbeitskammer 1 und die weitere Kammer 2 auf dem Werkstück 6 fixierbar sind. Vorteilhafterweise werden die Arbeitskammer 1 und die weitere Kammer 2 durch die zylindrische Welle 9 auf das Werkstück 6 gedrückt. Die Einrichtung 9 ist derart gestaltet, dass entstehende Abstandsabweichungen der Kammern 1 und 2 zu dem Werkstück 6 durch einen Längenausgleich 10 ausgleichbar sind.

Das in Fig. 7 als Anordnungsskizze dargestellte Ausführungsbeispiel einer Vorrichtung zum Elektronenstrahlschweißen A ist gegenüber den in Fig. 1 und Fig. 2 gezeigten Ausführungsbeispielen durch eine flexible Gestaltung der sich an den Öffnungsbereich der Arbeitskammer 1 beziehungsweise an den Öffnungsbereich der weiteren Kammer 2 anschließenden Bereiche modifiziert. Die Arbeitskammer 1 und die weitere Kammer 2 bilden dabei vorteilhafterweise ein sich an die Oberfläche eines Werkstücks 6, vorliegend die Oberfläche einer Welle, anpassbares Kammersystem 13.

In Fig. 8a und Fig. 8b ist in einer Anordnungsskizze ein weiteres Ausführungsbeispiel einer erfindungsgemäßen Vorrichtung zum Elektronenstrahlschweißen A dargestellt. Die Arbeitskammer 1 der Vorrichtung A weist zur Abdichtung der sich aus der Arbeitskammer 1 heraus oder in die Arbeitskammer 1 hinein bewegenden Schweißnahtüberwölbung 14 oder Schweißnahtunterwölbung (in Fig. 8a und Fig. 8b nicht dargestellt) vorteilhafterweise nebeneinander angeordnete, federbelastete stiftartige Elemente 15 auf. Bewegt sich die Arbeitskammer 1 relativ zu dem zu schweißenden Werkstück 6, werden die stiftartigen Elemente 15 durch Erhöhungen auf der Oberfläche des Werkstücks 6 von dem Werkstück 6 weg gedrückt beziehungsweise senken sich die stiftartigen Elemente 15 bei Vertiefungen auf der Oberfläche des Werkstücks 6 zu dem Werkstück 6 hin. Die stiftartigen Elemente 15 ermöglichen somit vorteilhafterweise eine flexible Anpassung an die Oberfläche des Werkstücks 6, wodurch die verschlossene Arbeitskammer 1 durch die stiftartigen Elemente 15 vorteilhafterweise besser abgedichtet ist und ein Vakuum in der Arbeitskammer 1 verbessert aufrecht erhalten werden kann. Derartige stiftartige Elemente 15 können vorteilhafterweise insbesondere auch für weitere Kammern, die die Arbeitskammer umgeben, insbesondere eine Schleusenkammer, vorgesehen werden.

In Fig. 9 ist als Anordnungsskizze in einer geschnittenen Frontansicht ein weiteres Ausführungsbeispiel einer erfindungsgemäßen Vorrichtung zum Elektronenstrahlschweißen A von Werkstücken 6 dargestellt. Die Vorrichtung A weist eine Einrichtung zur Erzeugung wenigstens eines Elektronenstrahls (in Fig. 9 nicht explizit dargestellt), eine Einrichtung zur Formung (in Fig. 9 nicht explizit dargestellt) und eine Einrichtung zur Führung (in Fig. 9 nicht explizit dargestellt) des wenigstens einen Elektronenstrahls 5 sowie eine Arbeitskammer 16, in welcher der Schweißvorgang erfolgt, auf. Die Arbeitskammer 16 weist zwei Öffnungen 18 und 19 auf, mit denen die Arbeitskammer 16 um einen Teilbereich eines zu schweißenden Werkstücks 6 derart angeordnet ist, dass die Öffnungen 18 und 19 der Arbeitskammer 16 mit dem Werkstück 6 verschlossen sind. An den Öffnungen 18 und 19 der Arbeitskammer 16 sind Mittel 17 zum Fixieren der Arbeitskammer 16 auf dem Werkstück 6 angeordnet. Die Mittel 17 ermöglichen vorteilhafterweise ein zumindest weitestgehend luftdichtes Verschließen der Öffnungen 18 und 19 der Arbeitskammer 16. Mittels einer Einrichtung zum Erzeugen eines gegenüber dem Atmosphärendruck verminderten Drucks (in Fig. 9 nicht explizit dargestellt) wird in der Arbeitskammer 16 ein Vakuum erzeugt.

Die Bereiche 16a und 16b der Arbeitskammer 16 sind vorteilhafterweise manschettenartig ausgebildet und über eine Gleitverbindung mit dem Bereich 16c der Arbeitskammer 16 verbunden. In der Arbeitskammer 16 trifft der Elektronenstrahl 5 auf das Werkstück 6. Wird das Werkstück 6 um die Achse X gedreht, so bewegt sich der Bereich 16c der Arbeitskammer 16 relativ zu dem Werkstück 6, wobei die Teilbereiche 16a und 16b relativ zu dem Werkstück 6 nicht bewegt werden. Beim Drehen des Werkstücks 6 wird der Elektronenstrahl 5 entlang der Schweißnahtvorbereitung 11 geführt. Der Elektronenstrahl 5 verschweißt dabei die Teilstücke 6a und 6b des Werkstücks 6.

Die in den Figuren der Zeichnung dargestellten und im Zusammenhang mit diesen beschriebenen Ausführungsbeispiele der Erfindung dienen lediglich der Erläuterung der Erfindung und sind für diese nicht beschränkend.

### Bezugszeichenliste:

- A: Vorrichtung zum Elektronenstrahlschweißen
- 1: Arbeitskammer
- 2: weitere Kammer (Schleusenkammer)
- 3: gegenüber Atmosphärendruck verminderter Druck
- 4: gegenüber Atmosphärendruck verminderter Druck
- 5: Elektronenstrahl
- 6: Werkstück (Welle)
- 7: Arbeitskammer (umlaufend)
- 8: weitere Kammer (umlaufend)
- 9: Einrichtung zum Fixieren der Kammer (1 und/oder 2) auf dem Werkstück
- 10: Längenausgleich
- 11: Schweißnahtvorbereitung
- 12: Werkstück (Blech)
- 13: Kammersystem
- 14: Schweißnahtüberwölbung
- 15: stiftartige Elemente
- 16: Arbeitskammer (manschettenartig)
- 16a: Teilbereich der Arbeitskammer (16)
- 16b: Teilbereich der Arbeitskammer (16)
- 16c: Teilbereich der Arbeitskammer (16)
- 17: Mittel zum Fixieren
- 18: Öffnung der Arbeitskammer (16)
- 19: Öffnung der Arbeitskammer (16)
- D: Drehrichtung
- P: Bewegungsrichtung

## Patentansprüche

1. Verfahren zum Schweißen eines Werkstücks (6, 12) mittels wenigstens eines Elektronenstrahls (5),
**dadurch gekennzeichnet, dass**
eine wenigstens eine Öffnung (18, 19) aufweisende Arbeitskammer (1, 7, 16) mit der wenigstens einen Öffnung (18, 19) um einen Teilbereich des zu schweißenden Werkstücks (6) derart angeordnet wird, dass die wenigstens eine Öffnung (18, 19) der Arbeitskammer (1, 7, 16) von dem Werkstück (6, 12) oder zumindest einem Teilbereich des Werkstücks (6, 12) verschlossen wird,
in der mit dem einen Werkstück (6, 12) beziehungsweise dem Teilbereich des Werkstücks (6, 12) verschlossenen Arbeitskammer (1, 7, 16) ein gegenüber dem atmosphärischen Druck verringerter Druck (3), vorzugsweise ein Vakuum, erzeugt wird,
und der wenigstens eine Elektronenstrahl (5) derart geformt und geführt wird, dass der wenigstens eine Elektronenstrahl (5) innerhalb der geschlossenen Arbeitskammer (1, 7, 16) auf das zu schweißende Werkstück (6, 12) auftrifft.

2. Verfahren zum Elektronenstrahlschweißen nach Anspruch 1, **dadurch gekennzeichnet, dass** die wenigstens eine Öffnung (18, 19) der Arbeitskammer (1, 7, 16) von dem Teilbereich eines zu schweißenden Werkstücks (6, 12), um den die Arbeitskammer (1, 7, 16) mit der wenigstens einen Öffnung (18, 19) angeordnet wird, verschlossen wird.

3. Verfahren zum Elektronenstrahlschweißen nach Anspruch 1 oder Anspruch 2, **dadurch gekennzeichnet, dass** die Arbeitskammer (1, 7, 16) während des Schweißvorganges zumindest teilweise relativ zu dem zu schweißenden Werkstück (6, 12) bewegt wird.

4. Verfahren zum Elektronenstrahlschweißen nach einem der Ansprüche 1 bis 3, **dadurch gekennzeichnet, dass** die Arbeitskammer (1, 7, 16) und/oder die wenigstens eine Öffnung (18, 19) der Arbeitskammer (1, 7, 16) auf dem zu schweißenden Werkstück (6, 12) fixiert wird.

5. Vorrichtung zum Elektronenstrahlschweißen (A) von Werkstücken (6, 12) mit wenigstens einer Einrichtung zur Erzeugung wenigstens eines Elektronenstrahls (5),
wenigstens einer Einrichtung zur Formung und/oder Führung des wenigstens einen Elektronenstrahls (5) und
einer Arbeitskammer, in welcher der Schweißvorgang erfolgt,
**dadurch gekennzeichnet, dass**
die Arbeitskammer (1, 7, 16) wenigstens eine Öffnung (18, 19) aufweist,
und die Arbeitskammer (1, 7, 16) mit der wenigstens einen Öffnung (18, 19) um einen Teilbereich eines zu schweißenden Werkstücks (6, 12) derart anordbar ist, dass die wenigstens eine Öffnung (18, 19) der Arbeitskammer (1, 7, 16) mit dem Werkstück (6, 12) oder zumindest einem Teilbereich des Werkstücks (6, 12) verschließbar ist.

6. Vorrichtung (A) nach Anspruch 5, **dadurch gekennzeichnet, dass** die Arbeitskammer (1, 7, 16) in wenigstens einer weiteren Kammer (2, 8) angeordnet ist, wobei die wenigstens eine weitere Kammer (2, 8) jeweils wenigstens eine Öffnung aufweist, und die wenigstens eine weitere Kammer mit der jeweils wenigstens einen Öffnung um einen Teilbereich eines zu schweißenden Werkstücks (6, 12) derart anordbar ist, dass jeweils die wenigstens eine Öffnung der wenigstens einen weiteren Kammer (2, 8) mit dem Werkstück (6, 12) oder zumindest einem Teilbereich des Werkstücks (6, 12) verschließbar ist.

7. Vorrichtung (A) nach Anspruch 5 oder Anspruch 6, **dadurch gekennzeichnet, dass** die wenigstens eine Öffnung (18, 19) der Arbeitskammer (1, 7, 16) und/oder die jeweils wenigstens eine Öffnung der wenigstens einen weiteren Kammer (2, 8) mit dem Teilbereich eines zu schweißenden Werkstücks (6, 12) verschließbar ist, um den die Arbeitskammer (1, 7, 16) mit der wenigstens einen Öffnung (18, 19) beziehungsweise die wenigstens eine weitere Kammer (2, 8) mit der wenigstens einen Öffnung angeordnet ist.

8. Vorrichtung (A) nach einem der Ansprüche 5 bis 7, **dadurch gekennzeichnet, dass** die Arbeitskammer (1, 7, 16) und/oder die wenigstens eine weitere Kammer (2, 8) bei verschlossener Öffnung (18, 19) der Arbeitskammer (1, 7, 16) beziehungsweise bei verschlossener Öffnung der wenigstens einen weiteren Kammer (2, 8) zumindest teilweise relativ zu dem zu schweißenden Werkstück (6, 12) bewegbar ist.

9. Vorrichtung (A) nach einem der Ansprüche 5 bis 8, **dadurch gekennzeichnet, dass** in der Arbeitskammer (1, 7, 16) und/oder in der wenigstens einen weiteren Kammer bei verschlossener Öffnung (18, 19) der Arbeitskammer (1, 7, 16) beziehungsweise bei verschlossener Öffnung der wenigstens einen weiteren Kammer (2, 8) ein gegenüber dem atmosphärischen Druck verminderter Druck (3, 4), vorzugsweise ein Vakuum, einstellbar ist.

10. Vorrichtung (A) nach einem der Ansprüche 5 bis 9, **gekennzeichnet durch** wenigstens eine Einrichtung zur Erzeugung eines gegenüber dem Atmosphärendruck verminderten Drucks, insbesondere eines Vakuums, in der Arbeitskammer (1, 7, 16) und/oder der wenigstens einen weiteren Kammer (2, 8).

11. Vorrichtung (A) nach einem der Ansprüche 5 bis 10, **gekennzeichnet durch** Mittel und/oder eine Einrichtung (9, 17), mittels der die Arbeitskammer (1, 7, 16) und/oder die wenigstens eine weitere Kammer (2, 8) auf dem zu schweißenden Werkstück (6, 12) fixierbar ist.

12. Vorrichtung (A) nach einem der Ansprüche 5 bis 11, **dadurch gekennzeichnet, dass** die Arbeitskammer (1, 7, 16) und/oder Teile der Arbeitskammer (1, 7, 16) und/oder die wenigstens eine weitere Kammer (2, 8) und/oder Teile der wenigstens einen weiteren Kammer auswechselbar ist.

13. Vorrichtung (A) nach einem der Ansprüche 5 bis 12 **gekennzeichnet durch** eine Einrichtung zur Steuerung und/oder Regelung der wenigstens einen Einrichtung zur Erzeugung wenigstens eines Elektronenstrahls (5),
eine Einrichtung zur Steuerung und/oder Regelung der wenigstens einen Einrichtung zur Formung und/oder Führung des wenigstens einen Elektronenstrahls (5),
eine Einrichtung zur Steuerung und/oder Regelung des Drucks (3) in der Arbeitskammer (1, 7, 16),
eine Einrichtung zur Steuerung und/oder Regelung des Drucks (4) in der wenigstens einen weiteren Kammer (2, 8),
eine Einrichtung zur Steuerung und/oder Regelung der relativen Bewegung der Arbeitskammer (1, 7, 16) zu dem Werkstück (6, 12),
eine Einrichtung zur Steuerung und/oder Regelung der relativen Bewegung der wenigstens einen weiteren Kammer (2, 8) zu dem Werkstück (6, 12), eine Einrichtung zur Steuerung und/oder Regelung der Fixierung der Arbeitskammer (1, 7, 16) auf dem zu schweißenden Werkstück (6, 12) und/oder
eine Einrichtung zur Steuerung und/oder Regelung der Fixierung der wenigstens einen weiteren Kammer (2, 8) auf dem zu schweißenden Werkstück (6, 12).
